# EUROPEAN PATENT SPECIFICATION

(11) **EP 0 435 555 B1**
(45) Date of publication and mention of the grant of the patent: **05.04.1995**
(21) Application number: 90313940.0
(22) Date of filing: 19.12.1990
(51) Int. Cl.: B29D 30/06

(54) **Method for vulcanising an elastomeric product**
Verfahren zum Vulkanisieren eines Elastomeres
Procédé de vulcanisation d'un produit en élastomère

(30) Priority: 28.12.1989 JP 340439/89
(43) Date of publication of application: 03.07.1991
(73) Proprietor: SUMITOMO RUBBER INDUSTRIES LIMITED, Kobe-shi Hyogo-ken (JP)
(72) Inventor: Kobayashi, Michihito, Toyota-shi, Aichi-ken (JP)
(74) Representative: Stewart, Charles Geoffrey

(56) References cited:
- EP-A- 0 050 956
- EP-A- 0 323 164

## Description

This invention relates to a method for vulcanising an elastomeric product according to the preamble of claim 1.

In a conventional method, an elastomeric product, such as a tyre for a vehicle, is vulcanised by the steps of placing the elastomeric product in a mould with a bladder, beginning to close the mould feeding shaping pressure into the bladder so as to bring the elastomeric product into contact with the inner surface of the mould by means of the inflated bladder, supplying steam as a heating medium into the bladder after the mould is completely closed, stopping the supply of steam either when the temperature of the elastomeric product rises to a predetermined level or after a lapse of a predetermined time, supplying combustion gas or nitrogen gas as a pressurising medium at a pressure equal to or higher than that of the steam, and discharging the mixture of heating medium and the pressuring medium after a lapse of a predetermined time. In such a vulcanisation, pipe inlets supplying the pressurising medium and the heating medium are opened, while pipe outlets for discharging the pressurising medium and the heating medium are kept closed. Also, the heating medium to heat the elastomeric product from the inside is only steam. The has is utilised purely for pressurisation.

Such a conventional vulcanisation method is known for example from European Patent Publication EP-A-0323164 which discloses all of the features of the preamble of claim 1.

In the case where the elastomeric product is a large size tyre, more heat is necessary from the inside than for a smaller tyre. This is because a large size tyre has greater thickness than smaller one. Accordingly, a longer heating time is usually required for a large size tyre than for a smaller one.

It is usual that the steam is supplied at a pressure of 13 to 15 kg/cm² and the gas is supplied at a pressure of 18 to 28 kg/cm². Accordingly, the pressure of steam is lower than that of the gas.

In the case of vulcanising a large size tyre having a greater thickness, it is preferable from a viewpoint of the time to change from the heating process to the pressurising process at as early a stage as possible after starting the heating process. This is because of the trouble due to air in rubber and bareness which can occur in the cured tyre. However, if the heating time is cut short, the thermal input given to the tyre will become less and after all the vulcanisation will end up either with a long cure time being needed to make up for the thermal input shortage or an under cure problem.

It is an object of the present invention to provide a method for vulcanising an elastomeric product which makes it possible to prevent air from being trapped in the elastomeric product and/or between the mould surface and the elastomeric product, or a bareness from occurring, and to cure the elastomeric product without prolonging the cure time.

According to the present invention a method for vulcanising an elastomeric product placed in a vulcanising means comprises steps of supplying heating medium to the elastomeric product and supplying pressurising medium to the elastomeric product at a higher pressure than the heating medium characterised in that in a first step the heating medium is supplied, in a second step the pressurising medium is supplied, in a third step the heating medium is supplied, and in a fourth step the pressurising medium is supplied.

In the methods of the present invention, the heating process is performed at least two times, and the pressurising process is performed two times or more. In an early stage of vulcanisation, when the rubber is fluid owing to temperature rise but it is not vulcanised, the pressurising process in which the pressuring medium at a higher pressure than the heating medium is supplied is performed.

At the stage when the air trapped in the elastomeric product and/or between the mould surface and the elastomeric product has been eliminated or there is no longer the danger of generating bareness on the surface of the elastomeric product, in other words, when it is perceived judging from the outside appearance of the elastomeric product that the rubber fluidity has come to an end, heating pressure is applied again.

Accordingly, the method of the present invention can produce an elastomeric product having no bareness without adding to the cure time.

The features and advantages of the present invention will become apparent from the following detailed description by way of example only, with reference to the accompanying drawings in which:-
Fig.1. is a schematic diagram of a vulcanising apparatus in which the method for vulcanising an elastomeric product of the present invention is carried out
Fig.2. is a diagram showing another discharge section of the vulcanising apparatus of Fig. 1.
Fig.3. is a graph showing comparatively the temperature rises of elastomeric products under four different vulcanisations
Fig.4. is a graph showing pressure changes in bladders under the four different vulcanisations
Fig.5. is a graph showing temperature rises of an elastomeric product under another vulcanising method of the present invention.
Fig.6. is a graph showing a pressure change in a bladder under the another vulcanising method of the present invention and
Fig.7 is a graph showing the vulcanising rate in a surface portion of an elastomeric product.

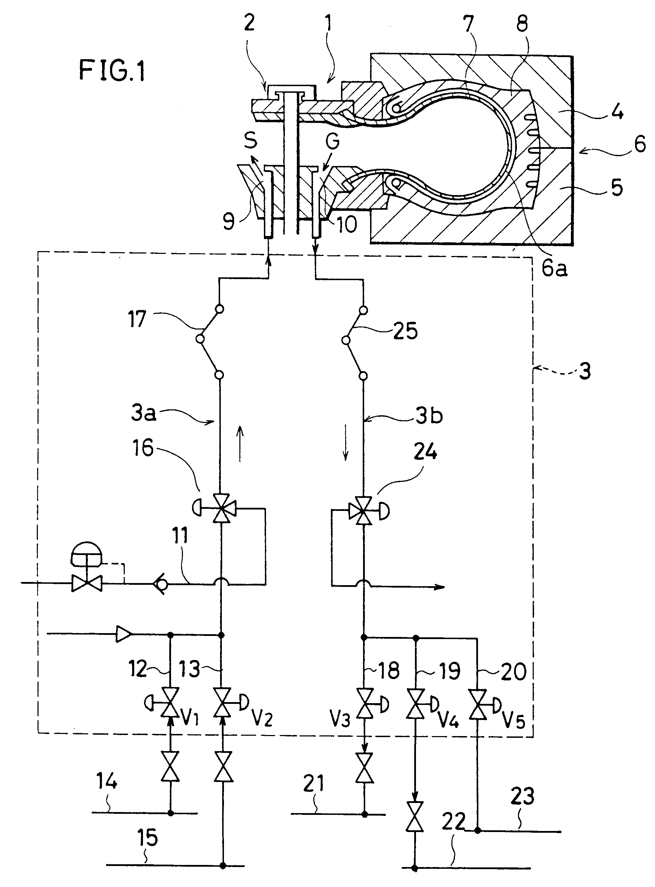

The vulcanising apparatus 1 includes a vulcanising unit 2 and a piping system 3. The vulcanising unit 2 includes a mould 6 having an upper mould and a lower mould 5, and a bladder 7 made of rubber. An elastomeric product 6a is defined by the mould 5 and the bladder 7. A raw tyre 8, which is the elastomeric product to be vulcanised, is placed in the vulcanising chamber 6a. After being placed in the vulcanising chamber 6a, the raw tyre 8 is heated and pressurised to vulcanised the rubber. However, it should be noted that the tyre 8 shown in Fig.1 is illustrated not as a raw tyre, but as an already vulcanised tyre or a tyre being vulcanised. Also, it should be noted that the present invention can be performed in a vulcanising apparatus without using a bladder.

The vulcanising unit 2 has a blowing input opening 9 and a discharging opening 10 which are communicated with respective vulcanising medium sources (not shown) by way of a piping system 3. The piping system 3 is roughly divided into a supply section 3a for supplying the vulcanising medium to the vulcanising unit 2 and a discharge section 3b for discharging the vulcanising medium from the vulcanising unit 2.

The supply section 3a includes a preshaping fluid supply pipe 11 for supplying a preshaping medium, such as gas, or steam and a pressurising medium supply pipe 12 for supplying a pressurising medium, such as nitrogen gas or combustion gas, and a heating medium supply pipe 13 for supplying a heating medium, such as steam.

The pressurising medium supply pipe 12 is communicated with a main gas pipe 14 by way of a first valve V1. The heating medium supply pipe 13 is communicated with a main steam pipe 15 by way of a second valve V2. The pressurising medium supply pipe 12 and the heating medium supply pipe 13 are communicated with the blowing opening 9 by way of a valve 16 and a flexible pipe 17. Also, the preshaping medium supply pipe 11 is communicated with the blowing opening 9 by way of the valve 16.

The discharge section 3b includes a drain discharge pipe 18, a gas discharge pipe 19, and a vacuum pipe 20. the drain discharge pipe 18 is communicated with a drain main pipe by way of a third valve V3. the gas discharge pipe 19 is communicated with a discharge gas main pipe 22 by way of a fourth valve V4.

The vacuum pipe 20 is communicated with a vacuum main pipe 23 by way of a fifth valve V5. The drain discharge pipe 18, the gas discharge pipe 19, and the vacuum pipe 20 are communicated with the discharging opening 10 by way of a valve 24 and a flexible pipe 25.

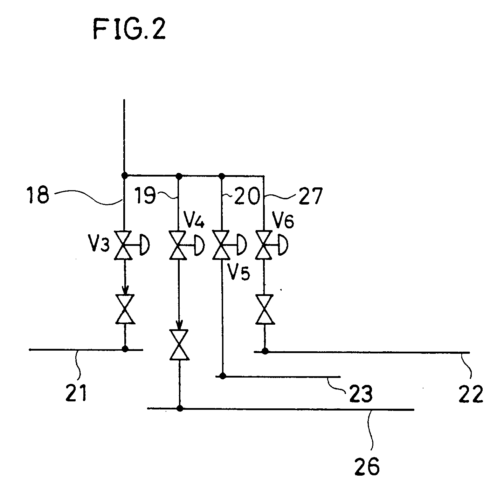

Also as shown in Fig. 2, it is possible to connect a gas recovery pipe 26 to the gas discharge pipe 19 to recover the discharge gas to reuse it as preshaping gas. In this case, another gas discharge pipe 27 is provided and it is communicated with the discharge gas main pipe 22 by way of a sixth valve V6.

Next, the vulcanising method of the present invention will be described which is carried out with the use of the above-mentioned vulcanising apparatus 1.

As a first step the raw tyre 8 is placed in the mould 6. Subsequently, the upper mould 4 and the lower mould 5 are closed, which means the moulds are coupled and pressed against each other at a predetermined pressure, while performing the preshaping process.

Next, the raw tyre 8 is heated by supplying steam as a heating medium into the bladder 7 by closing the valves V1, V3, V4, and V5, and opening the second valve V2.

The steam is supplied at a pressure of 14 kg/cm² for 2 minutes.

Thus a first heating process is performed.

The third step when the surface portion of the tyre 8 has a cure rate (ECU) of 15 percent or less e.g. after a lapse of 2 minutes after supplying the steam, the valve V1 is opened and the valve V2 is closed so that gas as pressurising medium is supplied into the bladder 7. The gas is supplied at a pressure 20kg/cm² for 13 minutes. Thus a first pressurising process is performed. The bladder 7 is consequently filled with a mixture of the steam and the gas.

The fourth step, when air trapped in the tyre or between the tyre 8 and the mould 6 has been discharged, or when the rubber fluidity comes to an end, is that the mixture is replaced with steam (heating medium) by closing the valve V1 and opening the valves V2 and V3. the steam blowing is performed for 1 minute. Thereafter, the valve is closed and steam is again supplied at a pressure of 14 kg/cm² for 1 minute to heat the tyre 8. Thus a second heating process is performed.

The fifth step, when the tyre 8 is supplied with enough heat or thermal input to complete vulcanisation, the valve V2 is closed and the valve V1 is opened to supply gas. The gas is supplied at a pressure of 20 kg/cm² for 28 minutes. Thus a second pressurising process is performed.

The sixth stage is to close valve V1 and open valve V4 so that a mixture of steam and the gas, or the has alone is discharged from the bladder 7 for a predetermined time, e.g. 30 second. Namely a discharge process is performed.

The next and seventh step is to close valve V4 and open valve V5 so that the mixture of the steam and the gas, or the gas is sucked out by the vacuum of the bladder 7 for a predetermined time. e.g. 30 second. Thus a vacuuming process is performed. After the pressure in the bladder 7 becomes pressure, the mould 6 is opened and the vulcanised tyre 8 is removed from the vulcanising unit 2.

As mentioned above, the first heating process (14 kg/cm² for 2 minutes) the first pressurising process (20 kg/cm², for 13 minutes), the steam blowing process (1 minute), the second heating process (14 kg/cm², for 1 minute) the second pressurising process (20 kg/cm², for 28 minutes), the discharging process (30 second), and the vacuuming process (30 seconds) are performed in the order mentioned above.

The steam blowing is performed to discharge the pressurising medium (nitrogen gas) from the bladder 7 and to ensure the entire replacement of the pressuring medium with the heating medium (steam). In other words, the steam blowing is performed to assure the second heating process which compensates for an insufficient heat supply from the first heating process which has been cut short.

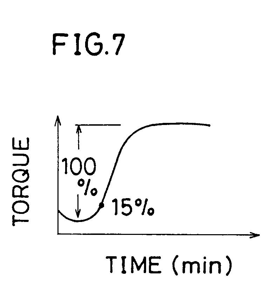

The reason why the first heating process is terminated when the surface portion is at a cure state (ECU) of 15 percent or less is that the rubber fluidity occurs in the vulcanisation rate of 15 percent or less as shown in Fig.7. Also, it is most effective and easiest to perform steam blowing to replace the pressurising medium with the heating medium. The second heating process is switched to the second vulcanising process when the time set in advance so as for the tyre temperature to reach a predetermined level necessary for vulcanisation in the second heating process has elapsed. The temperature level necessary for cure is determined in consideration of the critical temperature of the components of the tyre and vulcanisation time.

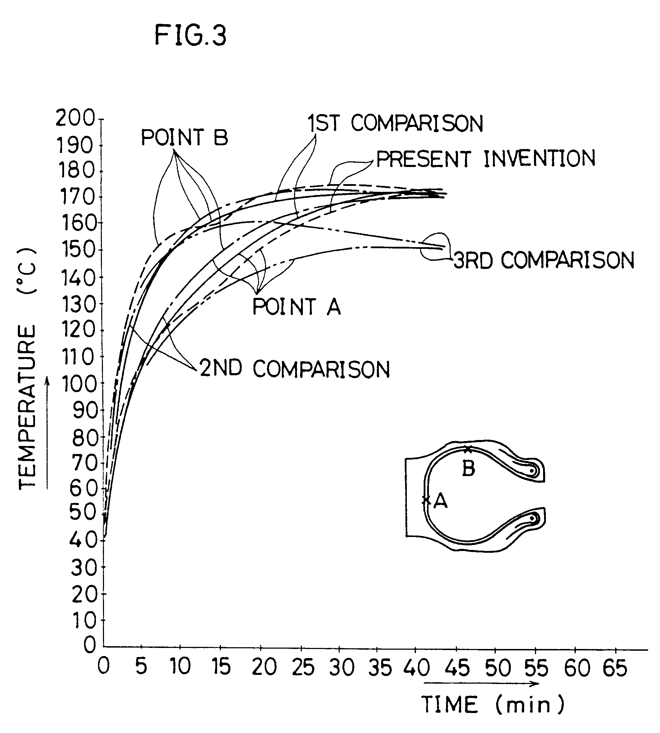

Fig.3. shows the temperature rise at two points A and B of tyres which are vulcanised in accordance with the method of the present invention, a first comparison method, a second comparison method, and a third comparison method. Point A refers to the position in an inner liner of the tyre where temperature rises slowest and Point B refers to a position in the inner liner where temperature rises fastest. Curves drawn with broken lines show the temperature of a tyre according to the present invention. Curves drawn with solid lines show the temperature of a tyre according to the first comparison method. Curves drawn with one dot chain lines show the temperature of a tyre according to the second comparison method. Curves drawn with two dot chains lines show the temperatures of a tyre according to the third comparison method.

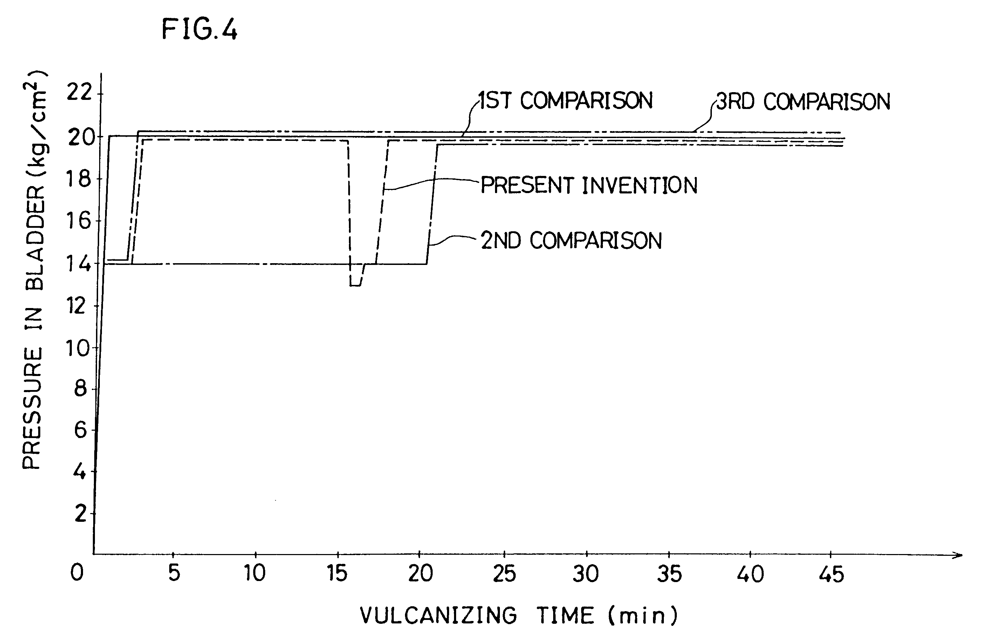

In the first comparison method, a raw tyre was heated and pressurised by use of hot water having a pressure of 20 kg/cm² and a temperature of 180°C for 45 minutes. In the second comparison method, a raw tyre was heated at a pressure of 14 kg/cm² for 20 minutes, and then pressurised at a pressure of 20 kg/cm² for 25 minutes. In the third comparison method, a raw tyre was heated at a pressure of 14 kg/cm² for 2 minutes, and then pressurised at a pressure of 20 kg/cm² for 43 minutes. Fig.4 shows respective pressure changes in bladders of the present method, first comparison method, second comparison method, and third comparison method.

From the graphs shown in Fig.3 and Fig.4, the following will be seen.

By comparing the present method to the first comparison method of hot water vulcanisation, the present method can be seen to provide substantially the same temperature rise as the first comparison method of the hot water vulcanisation. Also, the pressure in the bladder can be increased to the high value a sort time from the start of vulcanisation. Accordingly, the present method can obtain substantially the same vulcanisation time as the hot water vulcanisation without degrading the quality of tyre.

By comparing of the present method to the second comparison method, the present method can be seen to increase the pressure in the bladder to the high value in a shorter time from the start of vulcanisation than the second comparison method. Also, the present method can give substantially the same thermal input value (quantity of heat) to the tyre as the second comparison method. Accordingly, the present method can obtain as short a vulcanisation time as the second comparison method, and eliminate air trapping and bareness.

By comparing the present method to the third comparison method, the third comparison method can be seen to attain the high bladder pressure in the same time from the start of vulcanisation as the present method. However, the third comparison method has a longer vulcanisation time in total due to the fact the shortage of heat quantity resulted from the heating process of the third comparison method being performed for no more than 2 minutes has to be made up for.

In the present method, as shown in Fig.4, the pressure in the bladder lowers to about 13 kg/cm² at a mid time of the vulcanisation process, specifically, after the lapse of 15 to 17 minutes from the start of vulcanisation. However, in hot water vulcanisation using cooling water or other vulcanisations, the bladder pressure will generally drop to such a value, which causes no trouble with the quality of tyre. Further, this pressure drop can be presented by making the diameter of the pipe for steam blowing smaller, or providing the pipe with an orifice.

In the above mentioned method of the present invention, the entirety of the mixture of steam (heating medium) and nitrogen gas (pressurising medium), or the entirety of nitrogen gas (pressurising medium) is replaced with steam by the steam blowing.

However, there is a case where due to a short steam blowing, nitrogen gas (pressurising medium) is not entirely replaced with steam (heating mediums). Also, there is a case where due to the existence of a great pressure difference between steam and nitrogen gas, the bladder is entirely filled with only nitrogen gas (pressuring medium) when changing from the heating process to the pressurising process.

In other words, in a case where a heating process is firstly performed, a pressurising process is secondly performed, and another heating process is performed again. It is required that the entirety or a part of the pressurising medium, or the entirety or a part of the mixture of the heating medium and the pressurising medium is replaced with the heating medium supplied in the second heating process. Also, it is preferable to increase the bladder pressure to the high value promptly.

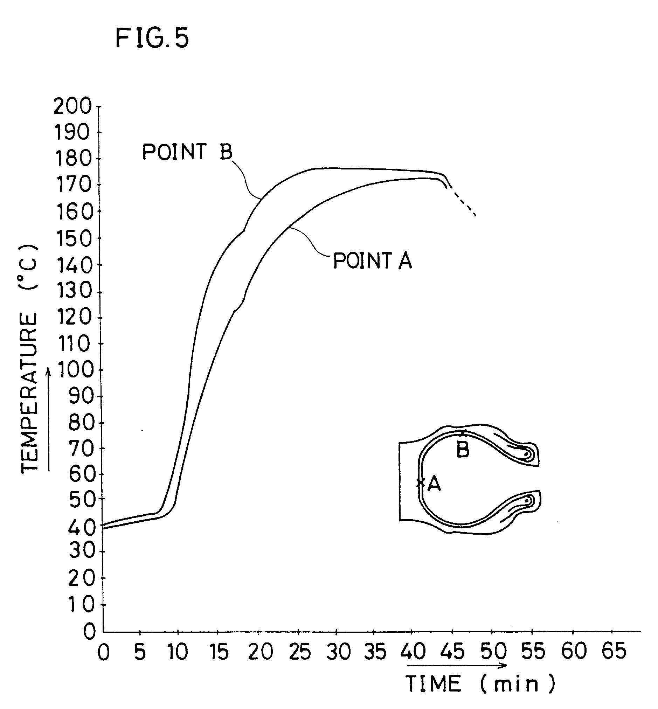

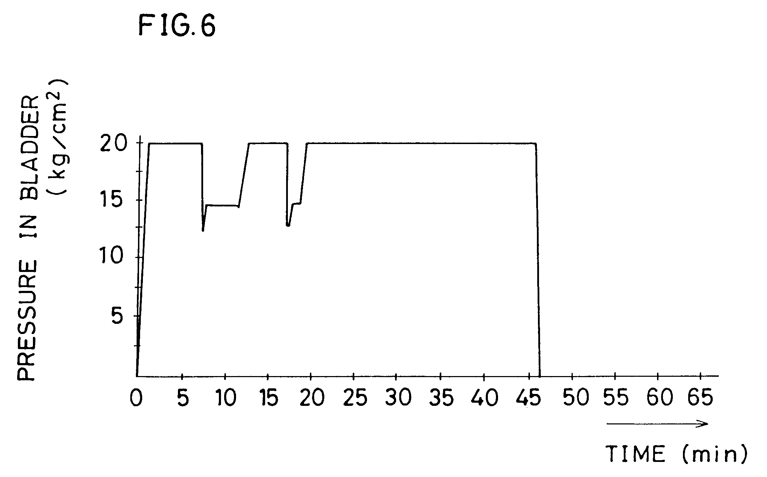

In another method of the present invention, as shown in Fig.5 and Fig. 6, a first pressurising process is performed by supplying pressurising medium having higher pressure than the heating medium. Next, a first process is performed by replacing then entirety or a part of the pressurising medium with the heating medium after a first steam blowing process is performed.

Thereafter, a second pressurising process is performed by supplying the pressurising medium. Next, a second heating process is performed by replacing the entirety or a part of the pressurising medium, or the entirety or a part of a mixture of the pressurising medium and the heating medium with the heating medium after a second steam blowing process is performed. Thereafter, a third pressurising process is performed by supplying the pressurising medium to complete vulcanisation.

Specifically, the first pressurising process is performed at a pressure of 20 kg/cm² for 7 minutes. The first steam blowing process is performed for 30 seconds. The first heating process is performed at a pressure of 14 kg/cm² for 4 minutes 30 second. The second pressurising process is performed at a pressure of 20 kg/cm² for 5 minutes. The second steam blowing process is performed for 1 minute. the second heating process is performed at a pressure 14 kg/cm² for 1 minute. The third pressurising process is performed at a pressure of 20 kg/cm² for 26 minutes. The discharging process is performed for 30 seconds. Finally, the vacuuming process is performed for 30 seconds.

In an early stage of the heating process, the heating process is switched to the pressurising process which is performed by the pressurising medium having higher pressure than the switched medium. Also, the pressurising process is changed to the heating process again when air trapped in the tyre or between the tyre and the mould surface has been eliminated, or rubber fluidity has come to an end. Thus a lack of thermal input due to the fact that the initial heating process is shortened can be compensated by the second heating process. Accordingly, the thermal input necessary for vulcanisation can be given without prolonging the vulcanisation time. Thereafter, another pressurising process is performed at a high pressure. Namely, high pressure vulcanisation is completed. In other words, when the raw rubber is fluid due to the temperature rise, vulcanisation is executed at a high pressure. After the trapped air is eliminated, or there is no longer the danger of generating bareness, namely when rubber fluidity comes to an end, another heating process is performed again. Consequently, the surface of the tyre can be formed, perfectly following the mould surface.

This method can prevent air from being trapped in the elastomeric product or between the mould and the product and bareness in the surface portions of the elastomeric product is avoided perfectly.

As mentioned above, the present invention can provide a shortened vulcanisation time. Accordingly, the present invention makes it possible to eliminate air trapping and bareness troubles and also eliminate under cure trouble. Thus, the present invention can produce an elastomeric product having a higher quality with a reduced cost.

In the first method of the present invention, two heating processes and two pressurising processes are performed. In the second method, two heating processes and three pressurising processes are performed. However, it should be noted that the number of heating processes are pressurising processes is not limited in the above-mentioned first and second methods. Also, it should be noted that the time of each process is not limited in the above-mentioned first and second methods.

Although the present invention has been fully described by way of method with reference to the accompanying drawings, it is to be understood that various changes and modifications will be apparent to those skilled in the art. Therefore, unless otherwise such changes and modifications depart from the scope of the invention, they should be construed as being included therein.

## Claims

1. A method for vulcanising an elastomeric product (8) placed in a vulcanising means (1) comprising steps of supplying heating medium to the elastomeric product (8) and supplying pressurising medium to the elastomeric product (8) at a higher pressure than the heating medium characterised in that the step of supplying heating medium and the step of supplying pressurising medium is performed one after another at least twice, so that in a first step the heating medium is supplied, in a second step the pressurising medium is supplied, in a third step the heating medium is supplied, and in a fourth step the pressurising medium is supplied.

2. A method according to claim 1 characterised in that the second step is performed when the rubber of a surface portion of the elastomeric product (8) is still fluid.

3. A method according to claim 1 characterised in that the third step is performed when air is discharged from inside or between the elastomeric product (8) and the mould (6) or rubber fluidity has come to an end.

4. A method according to any of claims 1 to 3, characterised in that in the third step, the heating medium substitutes for all of or part of the pressurising medium, or the whole of or a part of a mixture of the heating medium and the pressurising medium.

5. A method according to any of claims 1 to 4 characterised in that the fourth step is performed when the tyre temperature necessary for vulcanisation of the product has been attained.

6. A method according to any of claims 1 to 5 characterised by before first supplying the heating medium to the elastomeric product (8); supplying pressurising medium to the elastomeric product.

7. A method according to claim 6 wherein in the first step, the heating medium substitutes for all of or a part of the pressurising medium.

8. A method according to claim 7 characterised in that in the third step, the heating medium substitutes for all of or a part of the pressurising, or all of or a part of a mixture of the pressurising and heating medium.

## Patentansprüche

1. Ein Verfahren zum Vulkanisieren eines elastomeren Produkts (8), das in einem Vulkanisationsmittel (1) plaziert ist, welches die Schritte umfaßt, daß ein Heizmedium dem elastomeren Produkt (8) zugeführt wird und ein Unterdrucksetzungsmedium dem elastomeren Produkt (8) unter einem höheren Druck als das Heizmedium zugeführt wird,
dadurch gekennzeichnet,
daß der Schritt des Zuführens des Heizmediums und der Schritt des Zuführens des Unterdrucksetzungsmediums einer nach dem anderen jeweils mindestens zweimal durchgeführt wird, so daß in einem ersten Schritt das Heizmedium zugeführt wird, in einem zweiten Schritt das Unterdrucksetzungsmedium zugeführt wird, in einem dritten Schritt das Heizmedium zugeführt wird und in einem vierten Schritt das Unterdrucksetzungsmedium zugeführt wird.

2. Ein Verfahren nach Anspruch 1,
dadurch gekennzeichnet,
daß der zweite Schritt durchgeführt wird, wenn das Gummi eines Oberflächenbereiches des elastomeren Produkts (8) noch flüssig ist.

3. Ein Verfahren nach Anspruch 1,
dadurch gekennzeichnet,
daß der dritte Schritt durchgeführt wird, wenn Luft von der Innenseite oder zwischen dem elastomeren Produkt (8) und der Form (6) ausgelassen wird oder die Gummibeweglichkeit zu einem Ende gekommen ist.

4. Ein Verfahren nach einem der Ansprüche 1 bis 3,
dadurch gekennzeichnet,
daß in dem dritten Schritt das Heizmedium das gesamte Unterdrucksetzungsmedium oder einen Teil von diesem oder das gesamte Gemisch aus dem Heizmedium und dem Unterdrucksetzungsmedium oder einen Teil von diesem ersetzt.

5. Ein Verfahren nach irgendeinem der Ansprüche 1 bis 4,
dadurch gekennzeichnet,
daß der vierte Schritt durchgeführt wird, wenn die Reifentemperatur, die für die Vulkanisation des Produkts erforderlich ist, erreicht worden ist.

6. Ein Verfahren nach irgendeinem der Ansprüche 1 bis 5,
dadurch gekennzeichnet,
daß bevor das Heizmedium dem elastomeren Produkt (8) zum ersten Mal zugeführt wird ein Unterdrucksetzungsmedium dem elastomeren Produkt zugeführt wird.

7. Ein Verfahren nach Anspruch 6,
worin in dem ersten Schritt das Heizmedium das gesamte Unterdrucksetzungsmedium oder einen Teil von diesem ersetzt.

8. Ein Verfahren nach Anspruch 7,
dadurch gekennzeichnet,
daß in dem dritten Schritt das Heizmedium das gesamte Unterdrucksetzungsmedium oder einen Teil von diesem oder das gesamte Gemisch aus dem Unterdrucksetzungsmedium und dem Heizmedium oder einem Teil von diesem ersetzt.

## Revendications

1. Procédé de vulcanisation d'un produit élastomère (8) placé dans un dispositif de vulcanisation (1), comprenant des étapes de transmission d'un fluide de chauffage au produit élastomère (8) et de transmission d'un fluide de mise sous pression au produit élastomère (8) à une pression supérieure à celle du fluide de chauffage, caractérisé en ce que l'étape de transmission d'un fluide de chauffage et l'étape de transmission d'un fluide de mise sous pression sont réalisées l'une après l'autre au moins deux fois, si bien que, dans une première étape, le fluide de chauffage est transmis, dans une seconde étape, le fluide de mise sous pression est transmis, dans une troisième étape, le fluide de chauffage est transmis et, dans une quatrième étape, le fluide de mise sous pression est transmis.

2. Procédé selon la revendication 1, caractérisé en ce que la seconde étape est exécutée lorsque le caoutchouc d'une partie superficielle du produit élastomère (8) est encore fluide.

3. Procédé selon la revendication 1, caractérisé en ce que la troisième étape est exécutée lorsque l'air est évacué de l'intérieur du produit élastomère ou de l'espace compris entre le produit élastomère (8) et le moule (6) ou lorsque la fluidité du caoutchouc a disparu.

4. Procédé selon l'une quelconque des revendications 1 à 3, caractérisé en ce que, dans la troisième étape, le fluide de chauffage remplace la totalité ou une partie du fluide de mise sous pression, ou la totalité ou une partie d'un mélange du fluide de chauffage et du fluide de mise sous pression.

5. Procédé selon l'une quelconque des revendications 1 à 4, caractérisé en ce que la quatrième étape est exécutée lorsque la température du pneumatique nécessaire à la vulcanisation du produit a été atteinte.

6. Procédé selon l'une quelconque des revendications 1 à 5, caractérisé en ce qu'il comprend d'abord la transmission du fluide de chauffage au produit élastomère (8), puis la transmission du fluide de mise sous pression au produit élastomère.

7. Procédé selon la revendication 6, dans lequel, dans la première étape, le fluide de chauffage remplace la totalité ou une partie du fluide de mise sous pression.

8. Procédé selon la revendication 7, caractérisé en ce que, dans la troisième étape, le fluide de chauffage remplace la totalité ou une partie du fluide de mise sous pression, ou la totalité ou une partie d'un mélange du fluide de mise sous pression et du fluide de chauffage.
